(19) Europäisches Patentamt / European Patent Office / Office européen des brevets

(11) **EP 3 850 643 B1**

(12) **FASCICULE DE BREVET EUROPEEN**

(45) Date de publication et mention
de la délivrance du brevet:
**05.10.2022 Bulletin 2022/40**

(21) Numéro de dépôt: **19765512.9**

(22) Date de dépôt: **12.09.2019**

(51) Classification Internationale des Brevets (IPC):
*G21D 3/00* (2006.01)    *G21C 3/04* (2006.01)
*G21C 9/00* (2006.01)    *G21C 17/00* (2006.01)
*G21C 17/108* (2006.01)

(52) Classification Coopérative des Brevets (CPC):
**G21D 3/001; G21C 3/047; G21C 9/00;**
G21C 17/108; Y02E 30/00; Y02E 30/30

(86) Numéro de dépôt international:
**PCT/EP2019/074388**

(87) Numéro de publication internationale:
**WO 2020/053347 (19.03.2020 Gazette 2020/12)**

(54) **PROCÉDÉ DE PROTECTION D'UN RÉACTEUR NUCLÉAIRE ET RÉACTEUR NUCLÉAIRE CORRESPONDANT**

VERFAHREN ZUM SCHUTZ EINES KERNREAKTORS UND ENTSPRECHENDER KERNREAKTOR

METHOD FOR PROTECTING A NUCLEAR REACTOR AND CORRESPONDING NUCLEAR REACTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.09.2018 FR 1858153**

(43) Date de publication de la demande:
**21.07.2021 Bulletin 2021/29**

(73) Titulaire: **Framatome**
**92400 Courbevoie (FR)**

(72) Inventeurs:
• **ROYERE, Christian**
**92140 CLAMART (FR)**
• **SEGOND, Mathieu**
**75013 PARIS (FR)**

(74) Mandataire: **Lavoix**
**2, place d'Estienne d'Orves**
**75441 Paris Cedex 09 (FR)**

(56) Documents cités:
**FR-A1- 2 846 139    FR-A1- 2 946 454**

• **VINCENT HESSIRON ET AL: "AREVA's PCI methodologies for PWR enhanced plant maneuverability", PROCEEDINGS OF WRFPM 2014SENDAI, JAPAN, SEP. 14~17, 2014PAPER NO. 100158, vol. 100158, 14 septembre 2014 (2014-09-14), - 17 septembre 2014 (2014-09-17), pages 1-9, XP055489395, JP**

**Description**

L'invention concerne en général la protection des réacteurs nucléaires contre les risques de rupture de gaine de crayons de combustible par interaction pastille-gaine (IPG).

Aujourd'hui, sur les réacteurs à eau pressurisée français équipés de quatre boucles primaires, la protection vis-à-vis du risque de rupture de gaine par IPG est assurée par un arrêt automatique du réacteur sur puissance linéique élevée.

En d'autres termes, le système de protection du réacteur évalue périodiquement, avec une constante de temps courte, la puissance linéique des crayons du combustible nucléaire et déclenche un arrêt automatique du réacteur si la puissance linéique dans un tronçon de crayon dépasse une valeur maximale prédéterminée.

La rupture de la gaine par IPG résulte d'un phénomène thermomécanique. La puissance linéique est un paramètre qui n'est pas entièrement représentatif du phénomène physique conduisant au risque.

Pour tenir compte de cet écart, il est nécessaire d'établir une corrélation enveloppe entre le phénomène physique conduisant au risque et la puissance linéique.

Ceci est pénalisant vis-à-vis des marges de manœuvres pour le pilotage du réacteur.

L'article publié par V Bessiron et al « AREVA's PCI méthodologies for PWR enhanced plant maneuvrability » (Proceedings of WRFPM 2014, Sendai Japan, Sept 14-17 2014, Paper N°100158) décrit deux méthodes pour caractériser l'IPG pour des réacteurs de type PWR avec des gaines M5®. Ces méthodes reposent sur des calculs thermomécaniques pendant des transitoires de classe 2.

FR2946454A1 décrit un procédé de détermination de valeurs limites d'exploitation d'un réacteur nucléaire pour éviter l'endommagement dû à l'interaction pastille-gaine.

Dans ce contexte, l'invention vise à proposer un procédé de protection d'un réacteur nucléaire contre les risques de rupture de gaines de crayons de combustible par IPG qui est moins pénalisant pour le pilotage de réacteur.

A cette fin, l'invention porte selon un premier aspect sur un procédé de protection d'un réacteur nucléaire comportant un cœur ayant une pluralité d'assemblages de combustible nucléaire, chaque assemblage comportant une pluralité de crayons, chaque crayon comprenant une gaine et un combustible nucléaire enfermé dans la gaine, le procédé comportant les étapes suivantes :

- Etape (S12) : Reconstruction d'une puissance linéique maximale dégagée parmi les crayons des assemblages de combustible nucléaire du cœur ;
- Etape (S14) : Calcul de l'état thermomécanique et du taux d'épuisement des crayons ;
- Etape (S24) : Calcul d'une contrainte mécanique ou d'une densité d'énergie de déformation dans la gaine d'un des crayons en utilisant ladite puissance linéique maximale reconstruite, les états thermomécaniques calculés et les taux d'épuisement calculés, à l'aide d'un méta-modèle d'un code de thermomécanique ;
- Etape (S30) : Comparaison de la contrainte mécanique calculée ou de la densité d'énergie de déformation calculée avec un seuil respectif ;
- Etape (S32) : Arrêt du réacteur nucléaire si la contrainte mécanique calculée ou la densité d'énergie de déformation calculée dépasse ledit seuil respectif.

Comme expliqué plus haut, la rupture de la gaine par IPG est due à un phénomène thermomécanique, le paramètre représentatif étant la contrainte mécanique dans les gaines en zircaloy, ou la densité d'énergie de déformation (DED) pour les gainages M5.

L'invention permet de calculer en ligne, dans le système de protection du réacteur nucléaire, l'évolution de la contrainte ou de la densité d'énergie de déformation, et de la comparer à un seuil. C'est le dépassement du seuil qui déclenche l'arrêt automatique du réacteur. Ce seuil correspond directement à la limite technologique conduisant à la rupture. En d'autres termes, la limite technologique du combustible devient directement le seuil déclenchant l'arrêt automatique du réacteur. Le réacteur est donc protégé de la rupture par IPG à partir de la surveillance directe du paramètre physique thermomécanique conditionnant la rupture.

Le calcul en ligne de la contrainte ou de la DED est effectué avec une constante de temps compatible avec les exigences de protection du réacteur grâce à l'utilisation d'un méta-modèle du code de thermomécanique. Un tel méta-modèle permet de calculer la contrainte mécanique ou la densité d'énergie de déformation extrêmement rapidement, beaucoup plus rapidement qu'un code de thermomécanique classique fonctionnant typiquement par éléments finis.

Du fait que le réacteur est protégé directement à partir de la surveillance du paramètre physique conditionnant la rupture, il n'est pas nécessaire d'utiliser une corrélation enveloppe du type mentionné ci-dessus, de telle sorte que les marges de manœuvrabilité du réacteur sont améliorées.

Le procédé de protection peut également présenter une ou plusieurs des caractéristiques ci-dessous, considérées individuellement ou selon toutes les combinaisons techniquement possibles :

- l'étape de reconstruction de la puissance linéique maximale est effectuée en utilisant des mesures fournies en continu par des sondes de mesure d'un flux neutronique ;
- l'étape de reconstruction est effectuée avec une constante de temps inférieure à 1 minutes ;
- l'étape de calcul de l'état thermomécanique et du taux d'épuisement des crayons comprend une sous-étape de calcul de la distribution de puissance en trois dimensions dans le cœur, et une sous-étape de calcul du taux d'épuisement des crayons en utilisant la distribution de puissance en trois dimensions calculée ;
- l'étape de calcul de l'état thermomécanique et du taux d'épuisement des crayons comprend une sous-étape de calcul de de l'état thermomécanique des crayons à l'aide d'un code de thermomécanique, en utilisant la distribution de puissance en trois dimensions calculée ;
- l'étape de calcul de l'état thermomécanique et du taux d'épuisement des crayons comprend une sous-étape de stockage de l'état thermomécanique et du taux d'épuisement calculé pour un tronçon témoin d'un des crayons ;
- le tronçon témoin est le tronçon dégageant la puissance linéique maximale ;
- le méta-modèle du code de thermomécanique utilise au moins les entrées suivantes : contrainte mécanique ou densité d'énergie de déformation calculée au pas de temps précédent, puissance linéique maximale reconstruite, dérivée par rapport au temps de la puissance linéique maximale reconstruite, taux d'épuisement calculé pour le tronçon témoin ;
- le méta-modèle du code de thermomécanique est un réseau de neurones multicouches ;
- un biais prédéterminé est appliqué au seuil considéré pour l'étape de comparaison ;
- le procédé comporte une étape de détermination du biais, comprenant les sous-étapes suivantes :

    - Sous-étape (S34): Calcul de l'état thermomécanique initial et du taux d'épuisement initial des crayons ;
    - Sous-étape (S36) : Calcul de l'évolution dans le temps de la contrainte mécanique ou de la densité d'énergie de déformation dans la gaine des crayons à partir de l'état thermomécanique initial et du taux d'épuisement initial des crayons calculés, pour au moins un transitoire accidentel, à l'aide dudit code de thermomécanique ;
    - Sous-étape (S38) : Détermination du maximum de la contrainte mécanique ou de la densité d'énergie de déformation calculée à l'aide dudit code de thermomécanique ;
    - Sous-étape (S42) : Calcul de l'évolution dans le temps de la contrainte mécanique ou de la densité d'énergie de déformation dans la gaine des crayons à partir de l'état thermomécanique initial et du taux d'épuisement initial du combustible à l'endroit de la puissance linéique maximale des crayons calculés, pour ledit au moins un transitoire accidentel, à l'aide dudit méta-modèle du code de thermomécanique, en prenant en compte une simulation de l'évolution de ladite puissance linéique maximale reconstruite à l'étape (S12);
    - Sous-étape (S46) : Détermination du maximum de la contrainte mécanique ou de la densité d'énergie de déformation calculée à l'aide dudit méta-modèle du code de thermomécanique ;
    - Sous-étape (S48) : Détermination du biais, sur la base de l'écart entre d'une part la contrainte mécanique ou de la densité d'énergie de déformation calculé à l'aide dudit code de thermomécanique et d'autre part le maximum de la contrainte mécanique ou de la densité d'énergie de déformation calculé à l'aide dudit méta-modèle du code de thermomécanique.

Selon un second aspect, l'invention porte sur un réacteur nucléaire comprenant :

- un cœur ayant une pluralité d'assemblages de combustible nucléaire, chaque assemblage comportant une pluralité de crayons, chaque crayon comprenant une gaine et un combustible nucléaire enfermé dans la gaine,
- un ensemble de surveillance et de protection du réacteur, comprenant un calculateur configuré pour mettre en œuvre le procédé ayant les caractéristiques ci-dessus.

Selon un troisième aspect, l'invention porte sur un programme d'ordinateur comprenant les instructions pour l'exécution des étapes du procédé ayant les caractéristiques ci-dessus.

Selon un quatrième aspect, l'invention porte sur un support utilisable dans un ordinateur et sur lequel est enregistré le programme ci-dessus.

D'autres caractéristiques et avantages ressortiront de la description détaillée qui en est donné ci-dessous, à titre indicatif également limitatif, en référence aux figures annexées, parmi lesquelles :

- la figure 1 est une vue schématique illustrant un réacteur nucléaire à eau pressurisée ;
- la figure 2 est une vue schématique latérale d'un assemblage de combustible du cœur de réacteur de la figure 1 ;
- la figure 3 est une vue schématique en coupe longitudinale d'un crayon de combustible de l'assemblage de la figure 2 ;
- la figure 4 est un diagramme d'étape illustrant le procédé de protection de l'invention ;
- la figure 5 est une représentation schématique simplifiée d'un méta-modèle du type utilisé dans le procédé de la figure 4 ; et

- la figure 6 est un diagramme d'étape détaillant l'étape préalable de détermination du biais appliqué à l'état thermomécanique considéré pour l'étape de calcul de la contrainte mécanique ou de la DED dans le procédé de la figure 4.

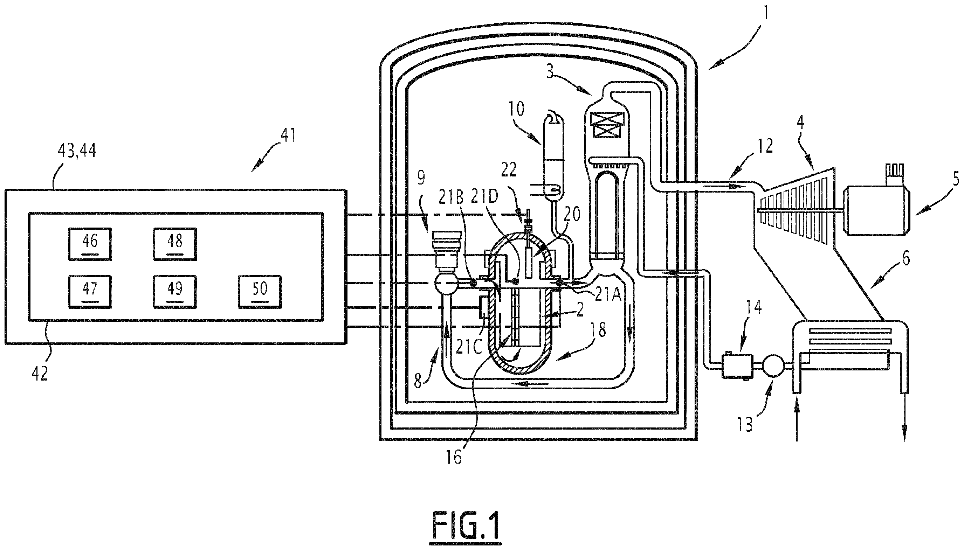

La figure 1 illustre schématiquement un réacteur nucléaire 1 qui comprend un cœur 2.

Le réacteur nucléaire 1 est typiquement un réacteur à eau pressurisée, et comprend :

- au moins un générateur de vapeur 3,
- une turbine 4 couplée à un générateur 5 d'énergie électrique, et
- un condenseur 6.

Le réacteur 1 comprend un circuit primaire 8 équipé d'au moins une pompe 9 et dans lequel circule de l'eau sous pression, selon le trajet matérialisé par les flèches sur la figure 1. Cette eau remonte notamment au travers du cœur 2 pour y être réchauffée en assurant la réfrigération du cœur 2.

Le circuit primaire 8 comprend en outre un pressuriseur 10 permettant de mettre sous pression l'eau circulant dans le circuit primaire 8 et de contrôler ladite pression.

L'eau du circuit primaire 8 alimente également le ou chaque générateur de vapeur 3 où elle est refroidie en assurant la vaporisation d'eau circulant dans un circuit secondaire 12.

La vapeur produite par le ou chaque générateur 3 est canalisée par le circuit secondaire 12 vers la turbine 4 puis vers le condenseur 6 où cette vapeur est condensée par échange de chaleur indirect avec de l'eau de refroidissement circulant dans le condenseur 6.

Le circuit secondaire 12 comprend en aval du condenseur 6 une pompe 13 et un réchauffeur 14.

De manière classique également, le cœur 2 comprend une pluralité d'assemblages 16 de combustible nucléaire.

Ces assemblages 16 sont chargés dans une cuve 18. Un seul assemblage 16 est représenté sur la figure 1, mais le cœur 2 comprend par exemple 157 assemblages 16.

Le réacteur 1 comprend des grappes de commande 20 qui sont disposées dans la cuve 18 au-dessus de certains assemblages 16. Une seule grappe 20 est représentée sur la figure 1, mais le cœur 2 peut comprendre par exemple environ 60 grappes 20.

Les grappes 20 sont être déplacées par des mécanismes 22 pour venir s'insérer dans les assemblages de combustible 16 qu'elles surplombent.

Classiquement, chaque grappe de commande 20 comprend des crayons comportant un ou plusieurs matériaux absorbant les neutrons.

Ainsi, le déplacement vertical de chaque grappe 20 permet de régler la réactivité du réacteur 1 et autorise des variations de la puissance globale P fournie par le cœur 2 depuis la puissance nulle jusqu'à la puissance nominale PN, en fonction de l'enfoncement des grappes 20 dans les assemblages 16.

Certaines de ces grappes 20 sont destinées à assurer la régulation du fonctionnement du cœur 2, par exemple en puissance ou en température, et sont dénommées grappes de contrôle. D'autres sont destinées uniquement à l'arrêt du réacteur 1 et sont dénommées grappes d'arrêt.

Les grappes 20 sont réunies en groupes en fonction de leur nature et de leur destination. Par exemple pour la majorité des réacteurs de type 900 MWe, ces groupes sont dénommés groupes G1, G2, N1, N2, R, SA, SB, SC, SD...

Le réacteur 1 comprend également un certain nombre de capteurs de mesure de valeurs effectives de paramètres de fonctionnement du réacteur, notamment un thermocouple 21A de mesure de la température moyenne de l'eau du circuit primaire en sortie de la cuve 18 et un thermocouple 21B de mesure de la température moyenne de l'eau du circuit primaire en entrée de la cuve 18.

De manière classique également, le réacteur nucléaire 1 comprend des sondes de mesure du flux neutronique dans le cœur 2 du réacteur, fonctionnant de manière continue.

Typiquement ces sondes sont des chambres externes 21C disposées autour de la cuve 18. Le nombre et les positions des chambres 21C, habituellement dénommées « chambres ex-core », varient en fonction du modèle du réacteur 1.

De manière classique encore, le réacteur 1 comprend des thermocouples 21D disposés dans le cœur 2 au-dessus d'assemblages 16 pour mesurer la température de l'eau du circuit primaire en sortie des assemblages 16.

Une seule chambre 21C et un seul capteur 21D ont été représentés sur la figure 1.

En plus ou à la place des chambres ex-core, certains réacteurs comprennent des chambres internes fixes de mesure en continu du flux neutronique (non représentées), lesquelles chambres sont disposées à l'intérieur de certains assemblages combustibles placés dans le cœur. Le nombre et les positions de ces chambres fixes, habituellement dénommées « in-core », varient en fonction du modèle du réacteur. Ces chambres sont par exemple des collectrons au cobalt.

Les chambres ex-core 21C et les thermocouples 21D ou les chambres « in-core » fixes fournissent en continu des informations relatives à la répartition tridimensionnelle de la puissance locale dans le cœur.

Le réacteur nucléaire 1 comprend encore des organes permettant de mesurer ou de reconstruire les grandeurs suivantes : positions des grappes 20 dans le cœur, pression dans le pressuriseur 10, vitesse de rotation de la ou chaque pompe primaire 9.

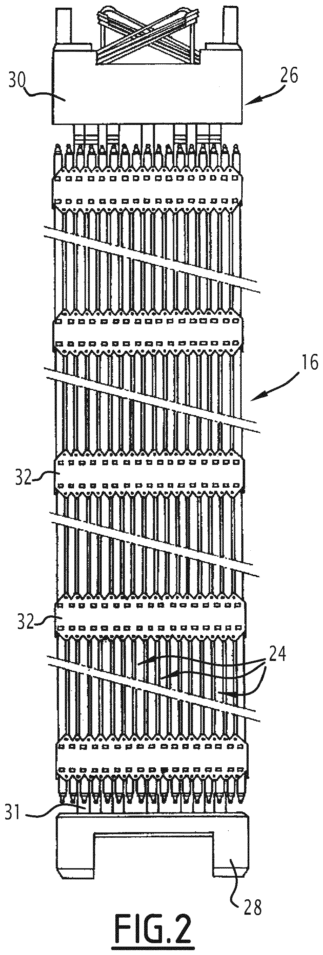

Comme illustré par la figure 2, chaque assemblage 16 comprend de manière classique une pluralité de crayons de combustible 24. Ces crayons sont disposés en réseau et maintenus en position par un squelette 26 de support des crayons 24.

Le squelette 26 comprend classiquement un embout inférieur 28, un embout supérieur 30, des tubes-guides 31 reliant les deux embouts 30 et 28 et destinés à recevoir des crayons des grappes de commande 20 et des grilles entretoises 32.

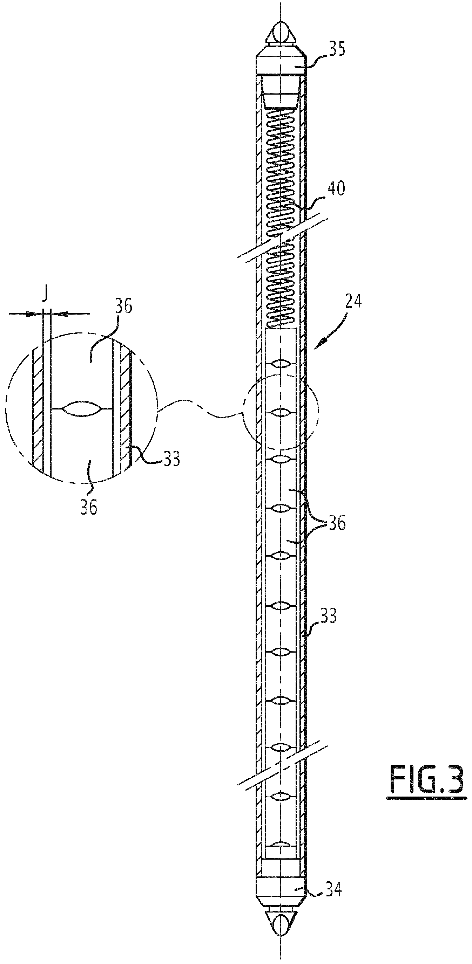

Comme illustré par la figure 3, chaque crayon de combustible 24 comprend de manière classique, une gaine 33 et un combustible nucléaire enfermé dans la gaine 33.

La gaine 33 est un tube longitudinal fermé à son extrémité longitudinale inférieure par un bouchon inférieur 34 et à son extrémité longitudinale supérieure par un bouchon supérieur 35.

Le combustible nucléaire comprend une série de pastilles 36 empilées dans la gaine 33 et prenant appui contre le bouchon inférieur 34. Un ressort de maintien 40 est disposé dans le tronçon supérieur de la gaine 33 pour prendre appui sur le bouchon supérieur 35 et sur la pastille 36 supérieure.

Classiquement, les pastilles 36 sont à base d'oxyde d'uranium et la gaine 33 est par exemple en un alliage de zirconium appelé zircaloy.

Sur la figure 3, qui correspond à un crayon de combustible 24 issu de fabrication et avant irradiation, il existe un jeu radial J entre les pastilles 36 et la gaine 33. Cela est illustré plus particulièrement par la partie cerclée agrandie de la figure 3.

Lorsque le réacteur 1 va fonctionner, par exemple à sa puissance globale nominale PN, le combustible nucléaire des pastilles 36 va être, selon le terme employé dans la technique, conditionné.

Le conditionnement se caractérise essentiellement par la fermeture du jeu J entre les pastilles 36 et la gaine 33, due au fluage de la gaine 33 et au gonflement des pastilles 36.

Plus spécifiquement, on peut distinguer les étapes suivantes pour chaque pastille 36 :

1) Sous l'effet de la différence de pression entre l'extérieur (eau du circuit primaire 8) et l'intérieur du crayon 24, la gaine 33 se déforme progressivement par fluage radialement vers l'intérieur du crayon 24. Toutes choses égales par ailleurs, la vitesse de fluage de la gaine 33 est une caractéristique du matériau qui la constitue. Par ailleurs, les produits de fission, qui sont en majorité retenus dans la pastille 36, induisent un gonflement de la pastille 36. Durant cette phase, la sollicitation de la gaine 33 du point de vue des contraintes est uniquement le fait de la pression différentielle existant entre l'extérieur et l'intérieur du crayon 24. Les contraintes dans la gaine 33 sont des contraintes de compression (négatives par convention).

2) Le contact entre la pastille 36 et la gaine 33 s'amorce au bout d'un laps de temps qui dépend essentiellement des conditions locales d'irradiation (puissance, flux neutronique, température...) et du matériau de la gaine 33. En réalité, le contact s'établit de façon progressive sur une période qui débute par un contact mou suivi par l'établissement d'un contact fort. La pression de contact de l'oxyde de la pastille 36 sur la face interne de la gaine 33 conduit à une inversion des contraintes dans la gaine 33 qui deviennent positives et tendent à solliciter la gaine en traction.

3) Le gonflement de la pastille 36 se poursuit et impose alors sa déformation à la gaine 33 vers l'extérieur. En régime permanent établi, cette expansion est suffisamment lente pour que la relaxation du matériau de la gaine 33 permette un équilibre des efforts dans la gaine 33. Une analyse montre que dans ces conditions le niveau des contraintes en traction est modéré (quelques dizaines de MPa) et ne présente pas de risque vis-à-vis de l'intégrité de la gaine 33.

S'il n'y a pas de risque de rupture de la gaine 33 en régime permanent du fait de l'équilibre thermomécanique dans la gaine 33 à des niveaux de contraintes assez faibles, un risque apparaît par contre dès que la puissance fournie par le crayon 24 varie fortement.

En effet, une augmentation de puissance engendre une augmentation de la température dans le crayon 24. Etant donnée la différence des caractéristiques mécaniques (coefficient de dilatation thermique, module d'Young) et la différence de température entre la pastille 36 en oxyde d'uranium et la gaine 33 en alliage de zirconium, la pastille 36 va se dilater davantage que la gaine 33 et imposer sa déformation à cette dernière.

Par ailleurs, la présence dans l'espace entre la gaine 33 et la pastille 36 de produits de fission corrosifs, tels que l'iode, crée les conditions de la corrosion sous contrainte. Ainsi, la déformation imposée par la pastille 36 à la gaine 33 lors d'un transitoire, ou variation, de puissance peut provoquer une rupture de la gaine 33.

Or, une telle rupture de la gaine 33 n'est pas admissible pour des raisons de sûreté puisqu'elle pourrait résulter en la libération de produits de fission dans le circuit primaire 8.

Des transitoires de puissance peuvent se produire lors d'un fonctionnement normal du réacteur 1, c'est-à-dire dans les situations dites de catégorie 1. En effet, des variations de puissance peuvent être nécessaires notamment pour s'adapter aux besoins en énergie électrique du réseau que le générateur 5 alimente. Des transitoires de puissance peuvent également se produire dans les situations accidentelles dites de catégorie 2, comme l'augmentation excessive de charge, le retrait incontrôlé de groupe(s) de grappes 20 en puissance, la dilution d'acide borique ou encore la chute de grappes 20 non détectée.

Le réacteur 1 comporte également un ensemble 41 de surveillance et de protection du réacteur, comprenant une unité de traitement d'informations 42.

L'ensemble 41 comporte un système de protection du réacteur 43.

Le système de protection du réacteur 43 est configuré pour protéger le réacteur nucléaire 1 contre un certain nombre de risques, et en particulier contre les risques de rupture de gaine de crayon de combustible par IPG.

Le système de protection du réacteur 43 reçoit les informations relevées par les capteurs équipant le réacteur nucléaire, et déclenche automatiquement l'arrêt du réacteur nucléaire en cas de risque, notamment en cas de risque de rupture de gaine de crayon de combustible par IPG. L'acquisition des informations des capteurs et le déclenchement de l'arrêt automatique du réacteur sont effectués avec une constante de temps courte, compatible avec la cinétique des phénomènes physiques à l'origine des risques à traiter.

L'ensemble 41 comporte également un système de surveillance du réacteur 44.

Le système de surveillance du réacteur 44 est configuré pour surveiller en permanence le fonctionnement du cœur.

Le système de surveillance du réacteur 44 reçoit les informations relevées par les capteurs équipant le réacteur nucléaire, et calcule des grandeurs caractéristiques du fonctionnement du réacteur. Il déclenche des alarmes quand ces grandeurs sortent du domaine de fonctionnement autorisé.

L'ensemble de surveillance et de protection du réacteur 41 est renseigné notamment par les thermocouples 21A, 21B et 21D. Il est également renseigné, notamment, par les chambres ex-core 21C et/ou les chambres in-core, et par les organes agencés pour mesurer ou reconstruire les positions des grappes 20 dans le cœur, la pression dans le pressuriseur 10, et la vitesse de rotation de la ou des pompes primaires 9.

L'unité de traitement d'information 42 est typiquement formée d'un processeur et d'une mémoire associé au processeur. Différents logiciels ou codes de calcul sont stockés dans la mémoire, comme décrit plus bas.

En variante, l'unité de traitement d'information est réalisée sous la forme de composants logiques programmables, tels que des FPGA (de l'anglais Field-Programmable Gâte Array), ou encore sous forme de circuit intégré dédié, tels que des ASIC (de l'anglais Application-Specific Integrated Circuit).

Pour garantir l'intégrité des crayons 24 vis-à-vis de l'interaction pastille 36 - gaine 33, l'invention propose un procédé de protection au cours duquel la contrainte mécanique ou la densité d'énergie de déformation dans la gaine d'au moins un des crayons est calculée, le procédé comprenant une étape d'arrêt du réacteur si la contrainte mécanique calculée ou la densité d'énergie de déformation calculée dépasse un seuil prédéterminé respectif.

L'unité de traitement d'information 42 est configurée pour mettre en œuvre le procédé de protection du réacteur nucléaire qui va être décrit ci-dessous.

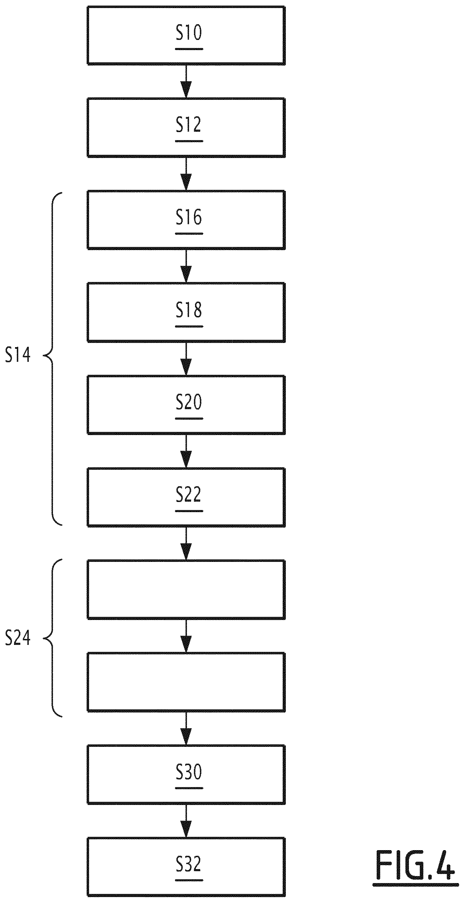

Ce procédé est illustré sur la figure 4.

Le procédé de protection comporte les étapes suivantes :

- étape S12 : reconstruction d'une puissance linéique maximale $P_{lin}^{max}$ dégagée parmi les crayons 24 des assemblages de combustible nucléaire 16 du cœur 2 ;
- étape S14 : calcul de l'état thermomécanique et du taux d'épuisement des crayons 24 ;
- étape S24 : calcul d'une contrainte mécanique ou d'une densité d'énergie de déformation (DED) dans la gaine 33 d'un des crayons 24 en utilisant ladite puissance linéique maximale reconstruite, les états thermomécaniques calculés et les taux d'épuisement calculés, à l'aide d'un méta-modèle d'un code de thermomécanique ;
- étape S30 : comparaison de la contrainte mécanique calculée ou de la densité d'énergie de déformation calculée avec un seuil respectif ;
- étape S32 : arrêt du réacteur 1 si la contrainte mécanique calculée ou la densité d'énergie de déformation calculée dépasse ledit seuil respectif.

Les différentes étapes ci-dessus sont effectuées de manière répétée, avec une constante de temps qui sera décrite ci-dessous.

Au cours de l'étape S12, le système de protection 43 reconstruit notamment la puissance linéique maximale dégagée par chacun des crayons des assemblages de combustible nucléaire, en utilisant typiquement les informations fournies par les chambres ex-core 21C ou par les chambres in-core.

Cette reconstruction est effectuée par un logiciel 46, intégré dans l'unité de traitement d'informations 42. Ce logiciel est connu en soi et ne sera pas décrit en détail ici.

On considère ici la puissance dégagée par unité de longueur longitudinale du crayon.

En d'autres termes, l'étape S12 comporte une opération permettant de déterminer comment la puissance maximale dégagée par unité de longueur varie au cours du temps.

L'étape de reconstruction de la puissance linéique maximale $P_{lin}^{max}$ est ainsi effectuée en utilisant des mesures fournies en continu par les sondes de mesure du flux neutronique (chambres ex-core 21C ou chambres in-core).

L'étape de reconstruction S12 est effectuée périodiquement, avec une constante de temps inférieure à une minute, de préférence inférieure à 10 secondes, encore de préférence inférieure à 1 sseconde, typiquement de l'ordre de 0.5 s.

L'étape S14 de calcul de l'état thermomécanique et du taux d'épuisement des crayons comprend :

- une sous-étape S16 de calcul de la distribution de puissance en trois dimensions dans le cœur 2 ; et
- une sous-étape S18 de calcul du taux d'épuisement des crayons en utilisant la distribution de puissance en trois dimensions calculée.

L'état thermomécanique considéré ici est le la contrainte mécanique $\sigma$, par exemple la contrainte tangentielle en peau interne $\sigma_{\theta\theta}$ ou la différence entre la contrainte tangentielle $\sigma_{\theta\theta}$ et la contrainte radiale radiale $\sigma_{rr}$.

L'étape S14 est effectuée en utilisant des logiciels intégrés dans le système de surveillance 44.

Les sous-étapes S16 et S18 sont effectuées par un logiciel 47 utilisant un code neutronique du cœur. Ce logiciel utilise par exemple le code SMART de la chaîne SCIENCE. Il est connu et ne sera pas décrit en détail ici.

Le logiciel 47 calcule la distribution de puissance en trois dimensions dans le cœur en utilisant les mesures fournies en continue par les chambres ex-core 21C et les thermocouples 21D ou les chambres in-core fixes. La demande FR 2787196 décrit par exemple une méthode pour obtenir la répartition de puissance en trois dimensions dans le cœur en utilisant au moins ces informations.

Typiquement, le logiciel 47 utilise la puissance thermique du cœur qui est calculée par bilan enthalpique, le déséquilibre axial de puissance fourni par les chambres ex-core 21C, la position des grappes, les température et débit d'entrée cuve, la pression du pressuriseur et les températures de sortie du cœur fournies par les thermocouples 21D.

A la sous-étape S16, la puissance est calculée en tout point du cœur 2.

A la sous-étape S18, le taux d'épuisement TE est calculé en tout point du cœur 2. Il est calculé plus précisément selon un maillage axial fixé par le maillage axial du code de neutronique utilisé par le système de surveillance 44, typiquement par le code SMART.

Le taux d'épuisement local résulte de l'intégration au cours du temps de la puissance locale.

L'étape S14 comporte encore une sous-étape S20 de calcul de l'état thermomécanique des crayons 24 à l'aide d'un code de thermomécanique, en utilisant la distribution de puissance en trois dimensions calculée.

Le code de thermomécanique est par exemple le code COPERNIC 48 développé par la société Framatome. Ce code de calcul 48 est connu et ne sera pas détaillé ici. Il est typiquement implémenté dans le système de surveillance 44.

A la sous-étape S20, l'état thermomécanique est calculé en tout point du cœur, c'est-à-dire en tout point de chacun des crayons 24 du cœur 2.

L'étape S14 comporte également une sous-étape S22 de stockage de l'état thermomécanique et du taux d'épuisement calculé pour un tronçon témoin d'un des crayons 24.

Le tronçon témoin est de préférence le tronçon dégageant la puissance linéique maximale. Ce tronçon témoin est déterminé en utilisant les données fournies par le logiciel 47 intégré au système de surveillance 44.

Ces informations sont stockées dans une mémoire 49 de l'unité de traitement d'informations 42.

L'étape S14 est effectuée de manière répétée, avec une constante de temps de l'ordre de l'heure. En effet, l'état thermomécanique des crayons 24 est essentiellement conditionné par la durée de fonctionnement du réacteur nucléaire à puissance intermédiaire, qui est normalement d'un ou plusieurs jours. Le calcul de l'état thermomécanique des crayons à l'aide du code de thermomécanique COPERNIC 48 demande environ une heure, ce qui est largement satisfaisant.

Du fait que l'état thermomécanique et le taux d'épuisement calculés pour le tronçon témoin sont utilisés par le système de protection 43 du réacteur nucléaire, il est nécessaire que cette information soit disponible de manière pérenne, même en cas de perte du système de surveillance 44, qui n'a pas la même classification que le système de protection 43. Ainsi, il est prévu que le stockage de ces informations dans la mémoire 49 ait la même classification que le système de protection 43 du point de vue de la sûreté.

En variante, il est possible de prévoir que le système de surveillance 44 ait la même classification que le système de protection 43 du point de vue de la sûreté.

La contrainte mécanique $\sigma$ calculée à la sous-étape S24 est par exemple la contrainte circonférentielle et normale $\sigma_{\theta\theta}$ dans la gaine 33. En variante, il s'agit de la différence entre la contrainte circonférentielle et normale $\sigma_{\theta\theta}$ et la contrainte radiale et normale or, appelée contrainte de TRESCA.

Typiquement, la contrainte mécanique $\sigma$ est calculée à l'étape S24 quand la gaine 33 est en zircaloy.

Pour des combustibles à gainage M5, il est prévu à l'étape S24 de calculer la densité d'énergie de déformation dans la gaine d'un des crayons 33. La densité d'énergie de déformation (DED) est définie de la manière suivante :

$$DED = \int_{t_1}^{t_2} \sigma_{\theta\theta} d\varepsilon_{\theta\theta}$$

où $\sigma_{\theta\theta}$ est la contrainte tangentielle en peau interne de la gaine 33 en MPa, et $\varepsilon_{\theta\theta}$ est la déformation tangentielle totale en peau interne de la gaine 33.

L'intégration débute lorsque la vitesse de déformation en peau interne dépasse une valeur de seuil fixée à $10^{-5}$ $s^{-1}$, et s'arrête lorsque la vitesse passe en dessous de ce seuil.

Du fait que le calcul de la contrainte ou de la DED doit être utilisé pour la protection du réacteur 1 lors d'accidents pouvant avoir une cinétique rapide, celui-ci ne peut pas être effectué par un code de thermomécanique tel que COPERNIC.

Pour répondre à l'exigence de temps de réponse de la protection, il est prévu d'utiliser un méta-modèle 50 du code de thermomécanique à l'étape S24. Le méta-modèle 50 est par exemple un méta-modèle du code de thermomécanique COPERNIC.

Le méta-modèle 50 est typiquement un réseau de neurones multicouches.

Le méta-modèle 50 utilise une fonction non-linéaire comme fonction de transfert, par exemple sigmoïde.

Le méta-modèle 50 utilise à chaque pas de temps, c'est-à-dire à chaque itération du calcul, au moins les entrées suivantes :

- contrainte mécanique ou densité d'énergie de déformation calculée au pas de temps précédent: $\sigma(t-dt)$ ;
- puissance linéique maximale reconstruite : $P_{lin}^{max}(t)$ ;
- dérivée par rapport au temps de la puissance linéique maximum reconstruite : $dP_{lin}^{max}(t)/dt$,
- taux d'épuisement calculé pour le tronçon témoin : TE(t).

La contrainte mécanique ou la densité d'énergie de déformation au pas de temps courant $\sigma(t)$ constitue la seule sortie du méta-modèle.

La puissance linéique maximale reconstruite est celle calculée à l'étape S12. Le taux d'épuisement calculé pour le tronçon témoin est celui mémorisé à la sous-étape S22.

Le calcul de la contrainte mécanique ou de la densité d'énergie de déformation est effectué par le méta-modèle 50 selon l'algorithme général :

$$\sigma(t) = \sigma(t - dt) + A\left(\frac{dP_{lin}^{max}(t)}{dt}\right)dt + B\,P_{lin}^{max}(t)$$

où A et B sont des constantes.

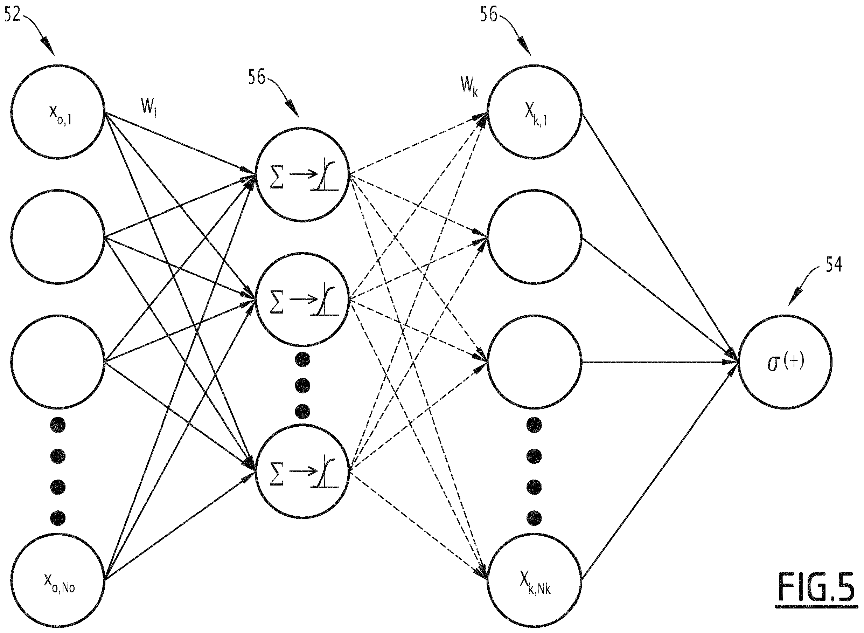

Plus précisément, comme illustré sur la figure 5, le réseau de neurones comporte une couche d'entrée 52 située à gauche sur la figure 5, une couche de sortie 54 située à droite de la figure 5, et une ou plusieurs couches intermédiaires 56 appelées encore couches cachées. Sur la figure 5, deux couches intermédiaires 56 sont représentées. Toutefois, le réseau de neurones pourrait comporter un nombre quelconque de couches intermédiaires.

La couche d'entrée comporte un neurone pour chacune des entrées scalaires mentionnées ci-dessus, à savoir quatre neurones. La couche de sortie 54 comporte un unique neurone, correspondant à la grandeur d'intérêt Y reconstruite en ligne à savoir la contrainte ou la DED selon la formule factorisée suivante :

$$Y(X_0) = \left[\prod_{i=1}^{i=nH+1} \sigma_i.A_i\right].X_0$$

La ou chaque couche cachée 56 comporte un nombre déterminé de neurones, par exemple au moins cinq neurones.

Le nombre de couches cachées et le nombre de neurones dans la ou chaque couche cachée est déterminé pendant la phase de paramétrage ou d'apprentissage du réseau de neurones.

Les entrées constituent un vecteur, appelé vecteur d'entrée et noté $X_0$. Dans le cas de l'invention :

$$X_0 = \left( \sigma(t-dt), \frac{dP_{lin}^{max}}{dt}(t), P_{lin}^{max}(t), TE \right)$$

Chaque couche cachée i du réseau de neurones élabore un vecteur de valeur $X_i$, par traitement du vecteur de valeur $X_{i-1}$ issu de la couche immédiatement précédente i-1.

Ainsi, pour chaque couche cachée i,

$$X_i = f_i . A_i . X_{i-1}$$

où i est compris entre 1 et nH le nombre de couches cachées, $A_i$ est une matrice prédéterminée de dimension $N_i*N_{i-1}$, $N_i$ étant le nombre de neurones de la couche i et $N_{i-1}$ étant le nombre de neurones de la couche i-1.

$f_i$ est un opérateur non linéaire prédéterminé. L'opérateur f est par exemple une fonction de transfert sigmoïde agissant sur chaque composante du vecteur.

Les opérateurs non linéaires $f_i$ agissent chacun comme une fonction non linéaire par exemple sigmoïde sur toutes les composantes du vecteur $A_i X_{i-1}$. Une fonction sigmoïde est une fonction s'exprimant de la manière suivante :

$$f(x) = 1/(1+e^{-lx})$$

où l est une constante prédéterminée

Chaque matrice $A_i$ agit comme une transformation affine sur les composantes du vecteur $X_{i-1}$. En d'autres termes :

$$A_i X_{i-1} = W_i X_{i-1} + b_i$$

où $W_i$ est la matrice des poids synaptiques qui relient les $N_i$ neurones de la couche i aux $N_{i-1}$ neurones i-1, et $b_i$ est le vecteur des biais de dimension $N_i$ de la couche i. Pour la dernière couche on notera que la matrice $A_{nH+1}$ est de dimension $1 \times N_{nH}$ et que $\sigma_{nH+1} = 1$ : il n'y a pas d'application de fonction de transfert non linéaire pour établir le signal Y de la dernière couche.

A l'étape S30, la contrainte mécanique calculée à l'étape S24 est comparée à un seuil prédéterminé, ou la densité d'énergie de déformation calculée à l'étape S24 est comparée à un seuil prédéterminé.

Ledit seuil est égal à la limite technologique du gainage considéré : contrainte de TRESCA conduisant à la rupture pour le gainage zircaloy, DED conduisant à la rupture pour le gainage M5.

A l'étape S32, une procédure d'arrêt automatique du réacteur est enclenchée si la contrainte mécanique calculée ou la densité d'énergie de déformation calculée dépasse ledit seuil respectif.

Cet arrêt automatique est réalisé en descendant à grande vitesse les grappes d'arrêt 20 dans le cœur 2 du réacteur nucléaire. Cette opération est entièrement automatique.

Le risque de rupture de gaine ne survient pas nécessairement au point chaud du cœur, c'est-à-dire au niveau du tronçon de gaine voyant la puissance linéique maximale. Le risque de rupture est plus grand au contraire au niveau d'un tronçon de crayon un peu moins puissant, mais d'avantage fragilisé par un taux d'épuisement plus élevé.

Le calcul de la contrainte ou de la DED au point chaud du cœur, c'est-à-dire dans le tronçon de gaine voyant la puissance linéique maximale, n'est donc pas entièrement conservatif.

Avantageusement, dans le processus de l'invention, un biais prédéterminé est appliqué à la limite technologique du gainage considéré, constituant le seuil de déclenchement de l'arrêt automatique du réacteur à l'étape S32. Le biais consiste en une diminution de la limite technologique.

Dans ce cas, le procédé comporte avantageusement une étape S10 de détermination du biais.

L'étape S10 est effectuée au cours d'une phase d'étude, appelée phase d'étude IPG, qui intervient avant la mise en œuvre des étapes S12, S14, S24, S30 et S32.

Cette étape S10 est effectuée une seule fois et n'est pas répétée.

Le biais est prédéterminé au sens où le même biais est utilisé à chacune des itérations du procédé de l'invention.

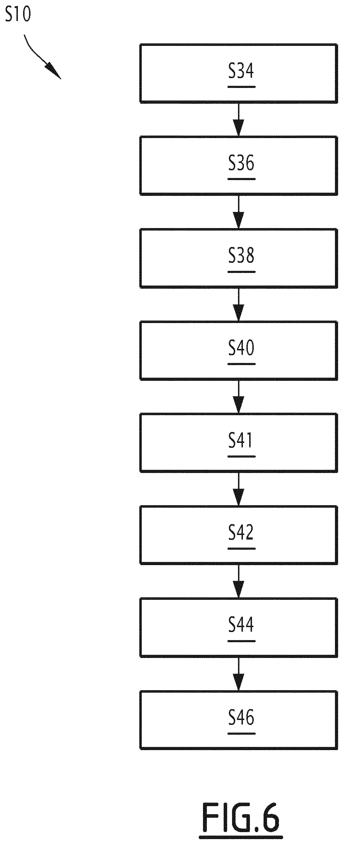

Comme illustré sur la figure 6, l'étape S10 de détermination du biais comprend les sous-étapes suivantes :

- sous-étape S34 : calcul de l'état thermomécanique initial et du taux d'épuisement initial des crayons 24 ;
- sous-étape S36 : calcul de l'évolution dans le temps de la contrainte mécanique ou de la densité d'énergie de déformation dans la gaine 33 des crayons 24 à partir de l'état thermomécanique initial et du taux d'épuisement initial des crayons 24 calculés, pour au moins un transitoire accidentel, à l'aide d'un code de thermomécanique ;

- sous-étape S38 : détermination du maximum de la contrainte mécanique ou de la densité d'énergie de déformation calculée à l'aide dudit code de thermomécanique ;

- sous-étape S42 : calcul de l'évolution dans le temps de la contrainte mécanique ou de la densité d'énergie de déformation dans la gaine 33 des crayons 24 à partir de l'état thermomécanique initial et du taux d'épuisement initial du combustible à l'endroit de la puissance linéique maximale des crayons 24 calculés, pour ledit au moins un transitoire accidentel, à l'aide du méta-modèle 50 du code de thermomécanique, en prenant en compte une simulation de l'évolution de ladite puissance linéique maximale reconstruite à l'étape S12;

- sous-étape S44 : détermination du maximum de la contrainte mécanique ou de la densité d'énergie de déformation calculée à l'aide du méta-modèle 50 du code de thermomécanique ;

- sous-étape S46 ; détermination du biais, sur la base de l'écart entre d'une part le maximum de la contrainte mécanique ou de la densité d'énergie de déformation calculée à l'aide dudit code de thermomécanique et d'autre part le maximum de la contrainte mécanique ou de la densité d'énergie de déformation calculé à l'aide du méta-modèle 50 du code de thermomécanique.

Ces sous-étapes sont toutes effectuées en bureau d'étude, lors des études de sûreté IPG.

La sous-étape S34 est effectuée en simulant l'évolution des crayons 36 au cours de l'enchaînement des cycles de gestion du combustible pour le réacteur nucléaire. On considère ici les cycles standards d'exploitation du réacteur nucléaire.

Cette simulation est effectuée en utilisant par exemple un logiciel de modélisation du comportement neutronique des crayons 24.

L'état thermomécanique initial des crayons est déterminé en utilisant un code de thermomécanique, par exemple COPERNIC.

Le ou les transitoires accidentels simulés à la sous-étape 36 sont des transitoires accidentels dits de catégorie 2, induisant les variations de puissance les plus fortes et les plus rapides dans le cœur 2. Ces transitoires sont par exemple les suivants :

- augmentation excessive de charge ;
- retrait incontrôlé de groupes de grappes de contrôle 20, alors que le réacteur est en puissance ;
- chute de grappes 20.

Ces transitoires sont décrit plus en détail dans FR2846139.

A la sous-étape S36, l'évolution de la contrainte mécanique ou de la densité d'énergie de déformation est calculée en utilisant un code de thermomécanique tel que COPERNIC.

Cette évolution est calculée typiquement pour la gaine 33 de tous les crayons 24. Elle est calculée en tous points de la gaine de chaque crayon.

Le maximum déterminé à la sous-étape S38 correspond à la valeur la plus élevée de contrainte mécanique ou de DED rencontrée pour un tronçon de gaine au cours du ou de chaque transitoire. La longueur du tronçon considéré est fixée par le maillage axial du code de thermomécanique.

L'étape S10 comporte encore une étape S40 de calcul de l'évolution dans le temps de la puissance linéique maximale reconstruite par le système de protection 43 pour ledit au moins un transitoire accidentel.

A la sous-étape S40, on simule donc la puissance linéique maximale qui serait reconstruite à l'étape S12 du procédé.

L'étape S10 comporte également une sous-étape S41 de stockage de l'état thermomécanique et du taux d'épuisement d'un tronçon témoin. Ce tronçon témoin correspond au tronçon de crayon 24 dégageant la puissance linéique maximale à l'état initial des crayons 24. Cet état initial est celui calculé à la sous-étape S34.

La sous-étape S42 est effectuée à l'aide du méta-modèle 50 utilisé à l'étape S24. L'évolution de la puissance linéique maximale reconstruite, déterminée à la sous-étape 40, constitue une des entrées de ce méta-modèle, pour la sous-étape S42. L'état thermomécanique et le taux d'épuisement du tronçon témoin obtenu à la sous-étape S41 constitue une autre entrée du méta-modèle 50 pour la sous-étape S42.

A la sous-étape S44, le maximum déterminé correspond à la valeur la plus élevée de contrainte mécanique ou de DED rencontrée au point chaud du cœur tel que l'estime le système de protection 43.

A la sous-étape S46, le biais est déterminé en comparant le maximum obtenu à la sous-étape S38 et le maximum obtenu à la sous-étape S44, pour le ou chaque transitoire.

Le biais à appliquer à l'état thermomécanique initial du tronçon témoin est choisi pour que le maximum calculé par le méta-modèle 50 à l'étape S44 soit toujours supérieur ou égal au maximum calculé par le code de thermomécanique à l'étape S38, pour tous les transitoires considérés.

Le biais est par exemple un écart de contrainte ou de DED défalqué de la limite technologique correspondante.

Le procédé de protection décrit ci-dessus a été décrit en mentionnant l'utilisation de codes de calcul tels que SMART et COPERNIC. En variante, il est mis en œuvre en utilisant d'autres codes de calcul équivalents.

Le procédé de l'invention peut être mis en œuvre en utilisant tout type de système de surveillance, sous réserve que celui-ci permette de déterminer en ligne la distribution de puissance en trois dimensions, et qu'il intègre un code de thermomécanique configuré pour déterminer le conditionnement du combustible.

De même, il a été décrit ci-dessus que le procédé de protection prévoyait le calcul de la contrainte mécanique ou de la densité d'énergie de déformation, en fonction du type de gaine des crayons de combustible. Il serait possible de calculer à la fois la contrainte et la densité d'énergie de déformation.

Le procédé de protection a été décrit dans une application à réacteur nucléaire de type à eau pressurisée (REP ou PWR). En variante, il est appliqué à tout autre type de réacteur nucléaire adapté.

**Revendications**

1. Procédé de protection d'un réacteur nucléaire (1), le réacteur nucléaire (1) comportant un cœur (2) ayant une pluralité d'assemblages de combustible nucléaire (16), chaque assemblage (16) comportant une pluralité de crayons (24), chaque crayon (24) comprenant une gaine (33) et un combustible nucléaire enfermé dans la gaine (33), le procédé comportant les étapes suivantes :

   - Etape (S12) : Reconstruction d'une puissance linéique maximale dégagée parmi les crayons (24) des assemblages de combustible nucléaire (16) du cœur (2) ;
   - Etape (S14) : Calcul de l'état thermomécanique et du taux d'épuisement des crayons (24);
   - Etape (S24) : Calcul d'une contrainte mécanique ou d'une densité d'énergie de déformation dans la gaine (33) d'un des crayons (24) en utilisant ladite puissance linéique maximale reconstruite, les états thermomécaniques calculés et les taux d'épuisement calculés, à l'aide d'un méta-modèle (50) d'un code de thermomécanique ;
   - Etape (S30) : Comparaison de la contrainte mécanique calculée ou de la densité d'énergie de déformation calculée avec un seuil respectif ;
   - Etape (S32) : Arrêt du réacteur nucléaire (1) si la contrainte mécanique calculée ou la densité d'énergie de déformation calculée dépasse ledit seuil respectif.

2. Procédé selon la revendication 1, dans lequel l'étape (S12) de reconstruction de la puissance linéique maximale est effectuée en utilisant des mesures fournies en continu par des sondes de mesure d'un flux neutronique (21C).

3. Procédé selon la revendication 1 ou 2, dans lequel l'étape de reconstruction (S12) est effectuée avec une constante de temps inférieure à 1 minutes.

4. Procédé selon l'une quelconque des revendications précédentes, dans lequel l'étape (S14) de calcul de l'état thermomécanique et du taux d'épuisement des crayons (24) comprend une sous-étape (S16) de calcul de la distribution de puissance en trois dimensions dans le cœur (2), et une sous-étape (S18) de calcul du taux d'épuisement des crayons (24) en utilisant la distribution de puissance en trois dimensions calculée.

5. Procédé selon la revendication 4, dans lequel l'étape (S14) de calcul de l'état thermomécanique et du taux d'épuisement des crayons (24) comprend une sous-étape (S20) de calcul de de l'état thermomécanique des crayons (24) à l'aide d'un code de thermomécanique, en utilisant la distribution de puissance en trois dimensions calculée.

6. Procédé selon l'une quelconque des revendications précédentes, dans lequel l'étape (S14) de calcul de l'état thermomécanique et du taux d'épuisement des crayons (24) comprend une sous-étape (S22) de stockage de l'état thermomécanique et du taux d'épuisement calculé pour un tronçon témoin d'un des crayons (24).

7. Procédé selon la revendication 6, dans lequel le tronçon témoin est le tronçon dégageant la puissance linéique maximale.

8. Procédé selon la revendication 6 ou 7, dans lequel le méta-modèle du code de thermomécanique utilise au moins les entrées suivantes : contrainte mécanique ou densité d'énergie de déformation calculée au pas de temps précédent, puissance linéique maximale reconstruite, dérivée par rapport au temps de la puissance linéique maximale reconstruite, taux d'épuisement calculé pour le tronçon témoin.

9. Procédé selon l'une quelconque des revendications précédentes, dans lequel le méta-modèle du code de thermomécanique est un réseau de neurones multicouches.

10. Procédé selon l'une quelconque des revendications précédentes, dans lequel un biais prédéterminé est appliqué au seuil considéré pour l'étape de comparaison (S30).

11. Procédé selon la revendication 10, dans lequel le procédé comporte une étape (S10) de détermination du biais, comprenant les sous-étapes suivantes :

- Sous-étape (S34) : Calcul de l'état thermomécanique initial et du taux d'épuisement initial des crayons (24) ;
- Sous-étape (S36) : Calcul de l'évolution dans le temps de la contrainte mécanique ou de la densité d'énergie de déformation dans la gaine (33) des crayons (24) à partir de l'état thermomécanique initial et du taux d'épuisement initial des crayons (24) calculés, pour au moins un transitoire accidentel, à l'aide dudit code de thermomécanique ;
- Sous-étape (S38) : Détermination du maximum de la contrainte mécanique ou de la densité d'énergie de déformation calculée à l'aide dudit code de thermomécanique ;
- Sous-étape (S42) : Calcul de l'évolution dans le temps de la contrainte mécanique ou de la densité d'énergie de déformation dans la gaine (33) des crayons (24) à partir de l'état thermomécanique initial et du taux d'épuisement initial du combustible à l'endroit de la puissance linéique maximale des crayons (24) calculés, pour ledit au moins un transitoire accidentel, à l'aide dudit méta-modèle du code de thermomécanique, en prenant en compte une simulation de l'évolution de ladite puissance linéique maximale reconstruite à l'étape (S12);
- Sous-étape (S44) : Détermination du maximum de la contrainte mécanique ou de la densité d'énergie de déformation calculée à l'aide dudit méta-modèle du code de thermomécanique ;
- Sous-étape (S46) : Détermination du biais, sur la base de l'écart entre d'une part la contrainte mécanique ou de la densité d'énergie de déformation calculé à l'aide dudit code de thermomécanique et d'autre part le maximum de la contrainte mécanique ou de la densité d'énergie de déformation calculé à l'aide dudit méta-modèle du code de thermomécanique.

12. Réacteur nucléaire (1) comprenant :

- un cœur (2) ayant une pluralité d'assemblages de combustible nucléaire (16), chaque assemblage (16) comportant une pluralité de crayons (24), chaque crayon (24) comprenant une gaine (33) et un combustible nucléaire enfermé dans la gaine (33) ;
- un ensemble (41) de surveillance et de protection du réacteur, comprenant une unité de traitement d'informations (42) configurée pour mettre en œuvre le procédé de l'une quelconque des revendications 1 à 11.

**Patentansprüche**

1. Verfahren zum Schutz eines Kernreaktors (1), der Kernreaktor (1) umfassend einen Kern (2), der eine Vielzahl von Kernbrennstoffbündeln (16), jedes Bündel (16) umfassend eine Vielzahl von Stäben (24), jeder Stab (24) umfassend eine Hülle (33) und einen in der Hülle (33) eingeschlossenen Kernbrennstoff, das Verfahren umfassend die folgenden Schritte:

- Schritt (S12): Rekonstruieren einer maximalen linearen Leistung, die zwischen den Stäben (24) des Kernbrennstoffbündels (16) des Kerns (2) freigesetzt wird;
- Schritt (S14): Berechnen des thermomechanischen Zustands und der Erschöpfungsrate von Stäben (24);
- Schritt (S24): Berechnen einer mechanischen Spannung oder einer Deformationsenergiedichte in der Hülle (33) eines der Stäbe (24) unter Verwendung der rekonstruierten maximalen linearen Leistung, der berechneten thermomechanischen Zustände und der berechneten Erschöpfungsraten, unter Verwendung eines Metamodells (50) eines thermomechanischen Codes;
- Schritt (S30): Vergleichen der berechneten mechanischen Spannung oder der berechneten Deformationsenergiedichte mit einem jeweiligen Schwellenwert;
- Schritt (S32): Abschalten des Kernreaktors (1), wenn die berechnete mechanische Spannung oder die berechnete Deformationsenergiedichte den jeweiligen Schwellenwert überschreitet.

2. Verfahren nach Anspruch 1, wobei der Schritt (S12) eines Rekonstruierens der maximalen linearen Leistung unter Verwendung von Messwerten durchgeführt wird, die kontinuierlich von Sonden zur Messung eines Neutronenflusses (21C) bereitgestellt werden.

3. Verfahren nach Anspruch 1 oder 2, wobei der Rekonstruktionsschritt (S12) mit einer Zeitkonstante von weniger als 1 Minute durchgeführt wird.

4. Verfahren nach einem der vorherigen Ansprüche, wobei der Schritt (S14) eines Berechnens des thermomechanischen Zustands und der Erschöpfungsrate der Stäbe (24) einen Teilschritt (S16) eines Berechnens der dreidimensionalen Leistungsverteilung in dem Kern (2) und einen Teilschritt (S18) eines Berechnens der Erschöpfungsrate der Stäbe (24) unter Verwendung der berechneten dreidimensionalen Leistungsverteilung umfasst.

5. Verfahren nach Anspruch 4, wobei der Schritt (S14) eines Berechnens des thermomechanischen Zustands und der Erschöpfungsrate der Stäbe (24) einen Teilschritt (S20) eines Berechnens des thermomechanischen Zustands der Stäbe (24) unter Verwendung eines thermomechanischen Codes umfasst, wobei die berechnete dreidimensionale Leistungsverteilung verwendet wird.

6. Verfahren nach einem der vorherigen Ansprüche, wobei der Schritt (S14) eines Berechnens des thermomechanischen Zustands und der Erschöpfungsrate der Stäbe (24) einen Teilschritt (S22) eines Speicherns des thermomechanischen Zustands und der Erschöpfungsrate umfasst, die für einen Kontrollabschnitt eines der Stäbe (24) berechnet wird.

7. Verfahren nach Anspruch 6, wobei der Kontrollabschnitt der Abschnitt ist, der die maximale lineare Leistung freisetzt.

8. Verfahren nach Anspruch 6 oder 7, wobei das Metamodell des thermomechanischen Codes mindestens die folgenden Eingaben verwendet: mechanische Spannung oder Deformationsenergiedichte, die in dem vorherigen Zeitschritt berechnet wurde, rekonstruierte maximale lineare Leistung, zeitliche Ableitung der rekonstruierten maximalen linearen Leistung, Erschöpfungsrate, die für den Kontrollabschnitt berechnet wird.

9. Verfahren nach einem der vorherigen Ansprüche, wobei das Metamodell des thermomechanischen Codes ein mehrschichtiges neuronales Netz ist.

10. Verfahren nach einem der vorherigen Ansprüche, wobei auf den für den Vergleichsschritt (S30) betrachteten Schwellenwert ein vorbestimmtes Bias angewendet wird.

11. Verfahren nach Anspruch 10, wobei das Verfahren einen Schritt (S10) eines Bestimmens des Bias umfasst, umfassend die folgenden Teilschritte:

- Teilschritt (S34): Berechnen des anfänglichen thermomechanischen Zustands und der anfänglichen Erschöpfungsrate von Stäben (24);
- Teilschritt (S36): Berechnen der zeitlichen Entwicklung der mechanischen Spannung oder der Deformationsenergiedichte in der Hülle (33) der Stäbe (24) aus dem anfänglichen thermomechanischen Zustand und der anfänglichen Erschöpfungsrate der Stäbe (24), die für mindestens einen zufälligen Übergang mithilfe des genannten thermomechanischen Codes berechnet werden;
- Teilschritt (S38): Bestimmen des Maximums der mechanischen Spannung oder der Deformationsenergiedichte, die mittels des genannten thermomechanischen Codes berechnet wird;
- Teilschritt (S42): Berechnen der zeitlichen Entwicklung der mechanischen Spannung oder der Deformationsenergiedichte in der Hülle (33) der Stäbe (24) aus dem thermomechanischen Anfangszustand und der anfänglichen Brennstofferschöpfungsrate an der Stelle der berechneten maximalen linearen Leistung der Stäbe (24) für den mindestens einen unfallbedingten Übergang mittels des Metamodells des thermomechanischen Codes unter Berücksichtigung einer Simulation der Entwicklung der maximalen linearen Leistung, die in Schritt (S12) rekonstruiert wird;
- Teilschritt (S44): Bestimmen des Maximums der mechanischen Spannung oder der Deformationsenergiedichte, die mittels des Metamodells des thermomechanischen Codes berechnet wird;
- Teilschritt (S46): Bestimmen des Bias, basierend auf der Abweichung zwischen einerseits der mechanischen Spannung oder der Deformationsenergiedichte, die mittels des thermomechanischen Codes berechnet wird, und andererseits dem Maximum der mechanischen Spannung oder der Deformationsenergiedichte, die mittels des Metamodells des thermomechanischen Codes berechnet wird.

12. Kernreaktor (1), umfassend:

einen Kern (2), der eine Vielzahl von Kernbrennstoffbündeln (16), jedes Bündel (16) umfassend eine Vielzahl von Stäben (24), jeder Stab (24) umfassend eine Hülle (33) und einen in der Hülle (33) eingeschlossenen Kernbrennstoff;

- eine Anordnung (41) zum Überwachen und zum Schutz des Reaktors, umfassend eine Informationsverarbeitungseinheit (42), die konfiguriert ist, um das Verfahren nach einem der Ansprüche 1 bis 11 durchzuführen.

**Claims**

1. A method for protecting a nuclear reactor (1), the nuclear reactor (1) comprising a core (2) having a plurality of nuclear fuel assemblies (16), each assembly (16) comprising a plurality of fuel rods (24), each fuel rod (24) comprising a cladding (33) and nuclear fuel enclosed in the cladding (33), the method comprising the following steps :

   - Step (S12): Reconstructing a maximum linear power released among the fuel rods (24) of the nuclear fuel assemblies (16) of the core (2);
   - Step (S14): Calculating the thermomechanical state and the burnup fraction of the fuel rods (24);
   - Step (S24): Calculating a mechanical stress or deformation energy density in the cladding (33) of one of the fuel rods (24) using the said reconstructed maximum linear power, the calculated thermomechanical states and the calculated burnup fractions, by means of a meta-model (50) of a thermomechanical code;
   - Step (S30): Comparing the calculated mechanical stress or the calculated deformation energy density with a respective threshold ;
   - Step (S32): Stopping the nuclear reactor (1) if the calculated mechanical stress or the calculated deformation energy density exceeds the said respective threshold.

2. The method according to the claim 1, wherein the step (S12) of reconstructing the maximum linear power is carried out using measurements provided continuously by neutron flux sensors (21C).

3. The method according to the claim 1 or 2, wherein the reconstruction step (S12) is carried out with a time constant of less than 1 minute.

4. The method according to any one of the preceding claims, wherein the step (S14) of calculating the thermomechanical state and the burnup fraction of the fuel rods (24) comprises a sub-step (S16) of calculating the three-dimensional power distribution in the core (2), and a sub-step (S18) of calculating the burnup fraction of the fuel rods (24) using the calculated three-dimensional power distribution.

5. The method according to the claim 4, wherein the step (S14) of calculating the thermomechanical state and the burnup fraction of the fuel rods (24) comprises a sub-step (S20) of calculating the thermomechanical state of the fuel rods (24) by means of a thermomechanical code, using the calculated three-dimensional power distribution.

6. The method according to any one of the preceding claims, wherein the step (S14) of calculating the thermomechanical state and the burnup fraction of the rods (24) includes a sub-step (S22) of storing the thermomechanical state and the calculated burnup fraction for a control section of one of the fuel rods (24).

7. The method according to the claim 6, wherein the control section is the section with the maximum linear power.

8. The method according to the claim 6 or 7, wherein the meta-model of the thermomechanical code uses at least the following inputs: mechanical stress or deformation energy density calculated at the previous time step, reconstructed maximum linear power, derivative with respect to time from the reconstructed maximum linear power, burnup fraction calculated for the control section.

9. The method according to any one of the preceding claims, wherein the meta-model of the thermomechanical code is a multilayer neural network.

10. The method according to any one of the preceding claims, wherein a predetermined bias is applied to the threshold considered for the comparison step (S30).

11. The method according to the claim 10, wherein the method comprises a step (S10) for determining the bias, comprising the following sub-steps :

- Sub-step (S34): Calculating the initial thermomechanical state and the initial burnup fraction of the fuel rods (24);
- Sub-step (S36): Calculating the evolution over time of the mechanical stress or the deformation energy density in the cladding (33) of the fuel rods (24) from the initial thermomechanical state and the initial burnup fraction of the fuel rods (24) calculated, for at least one accidental transient, by means of the said thermomechanical code;
- Sub-step (S38): Determining the maximum mechanical stress or deformation energy density calculated by means of the said thermomechanical code;
- Sub-step (S42) : Calculating the evolution over time of the mechanical stress or the deformation energy density in the cladding (33) of the fuel rods (24) from the initial thermomechanical state and the initial fuel burnup fraction at the location of the calculated maximum linear power of the fuel rods (24), for the said at least one accidental transient, by means of the said meta-model of the thermomechanical code, taking into account a simulation of the evolution of the said reconstructed maximum linear power in step (S12);
- Sub-step (S44): Determining the calculated maximum mechanical stress or deformation energy density by means of the said meta-model of the thermomechanical code;
- Sub-step (S46): Determining the bias, based on the difference between the calculated mechanical stress or deformation energy density by means of the said thermomechanical code on the one hand and the maximum mechanical stress or deformation energy density, calculated by means of the said meta-model of the thermomechanical code on the other hand.

12. A nuclear reactor (1) comprising :

- a core (2) having a plurality of nuclear fuel assemblies (16), each assembly (16) comprising a plurality of fuel rods (24), each fuel rod (24) comprising a cladding (33) and a nuclear fuel enclosed in the cladding (33);
- a reactor monitoring and protection assembly (41) comprising an information processing device (42) configured to implement the method of any one of the claims 1 to 11.

FIG.1

30

26

16

32

32

24

31

28

FIG.2

FIG.3

```
┌─────────────────┐
│      S10        │
└─────────────────┘
         │
         ▼
┌─────────────────┐
│      S12        │
└─────────────────┘
         │
         ▼
┌─────────────────┐
│      S16        │
└─────────────────┘
         │
         ▼
┌─────────────────┐
│      S18        │
└─────────────────┘
         │
         ▼
┌─────────────────┐
│      S20        │
└─────────────────┘
         │
         ▼
┌─────────────────┐
│      S22        │
└─────────────────┘
         │
         ▼
┌─────────────────┐
│                 │
└─────────────────┘
         │
         ▼
┌─────────────────┐
│                 │
└─────────────────┘
         │
         ▼
┌─────────────────┐
│      S30        │
└─────────────────┘
         │
         ▼
┌─────────────────┐
│      S32        │
└─────────────────┘
```

S14

S24

FIG.4

FIG.5

S10

```
┌─────────────────────┐
│        S34          │
└─────────────────────┘
           │
           ▼
┌─────────────────────┐
│        S36          │
└─────────────────────┘
           │
           ▼
┌─────────────────────┐
│        S38          │
└─────────────────────┘
           │
           ▼
┌─────────────────────┐
│        S40          │
└─────────────────────┘
           │
           ▼
┌─────────────────────┐
│        S41          │
└─────────────────────┘
           │
           ▼
┌─────────────────────┐
│        S42          │
└─────────────────────┘
           │
           ▼
┌─────────────────────┐
│        S44          │
└─────────────────────┘
           │
           ▼
┌─────────────────────┐
│        S46          │
└─────────────────────┘
```

## FIG.6

## RÉFÉRENCES CITÉES DANS LA DESCRIPTION

**Documents brevets cités dans la description**

- FR 2946454 A1
- FR 2787196
- FR 2846139

**Littérature non-brevet citée dans la description**

- **V BESSIRON et al.** AREVA's PCI méthodologies for PWR enhanced plant maneuvrability. *Proceedings of WRFPM,* 14 Septembre 2014